# EUROPEAN PATENT APPLICATION

(11) **EP 4 610 109 A1**
(43) Date of publication of application: **03.09.2025**
(21) Application number: 24218899.3
(22) Date of filing: 11.12.2024
(51) Int. Cl.: B60Q 9/00, B60W 50/14

(54) **APPARATUS FOR CONTROLLING VEHICLE EXIT ALARM AND METHOD THEREOF**

(30) Priority: 29.02.2024 KR 20240030164
(71) Applicant: Hyundai Mobis Co., Ltd., Gangnam-gu Seoul 06141 (KR)
(72) Inventor: KWON, Tae Min, 16891 Yongin-si, Gyeonggi-do (KR); SUH, E Jeong, 16891 Yongin-si, Gyeonggi-do (KR)
(74) Representative: Vossius & Partner Patentanwälte Rechtsanwälte mbB

(57) **Abstract**

Disclosed are an apparatus for controlling a vehicle exit alarm and a method thereof. The apparatus includes a sensor device including a plurality of sensors that detect state information of a vehicle and information about a line and a moving object around the vehicle, and a controller that detects an alarm target moving object within a preset alarm area based on sensor data collected from the plurality of sensors to output an exit alarm when a safety exit warning function is activated when a stopping event occurs while the vehicle is driven, and changes the alarm area based on location information of the line, the vehicle, and the moving object when the moving object is out of the alarm area.

## Description

### CROSS-REFERENCE TO RELATED APPLICATION

This application claims the benefit of priority to Korean Patent Application No. 10-2024-0030164, filed in the Korean Intellectual Property Office on February 29, 2024.

### TECHNICAL FIELD

The present disclosure relates to an apparatus for controlling a vehicle exit alarm and a method thereof that accurately identify and alert a moving object around a vehicle before an occupant exits the vehicle while the vehicle is stationary, thereby allowing the occupant to exit safely.

### BACKGROUND

Generally, a locking device may be installed on the door of a vehicle to prevent the door from being opened while driving, and the locking device may be unlocked to allow an occupant to get off after the vehicle is stopped.

As described above, when the door lock is unlocked and an occupant opens the door immediately without checking for other moving objects driving behind, there is a risk of a safety accident occurring where the passenger collides with other vehicles or moving objects such as bicycles or motorcycles entering from the rear.

According to the related art, a sensor is installed on the body or door of a vehicle, and an alarm signal is generated when the door is opened or closed or according to a detection signal of the sensor, thereby notifying of a dangerous situation.

In addition, according to the related art, an alarm area is set within a short range around the body of a vehicle, and a dangerous situation is guided according to sensing information in the set alarm area, so that the occupant may get off safely.

However, because the alarm area set for the vehicle is a fixed area, when a rear-approaching moving object exists in an area other than the alarm area among the side lane areas, it may not be detected as an alarm target. In this case, even though there is a risk of collision when getting off, a warning is not output and passengers are not aware of it, resulting in an accident. Furthermore, an alarm is output only when a moving object is detected in the alarm area even in the same line, and no warning is given for a moving object that exists in an area other than the alarm area within the same line, thereby reducing the reliability of a rear warning system.

### SUMMARY

The present disclosure has been made to solve the above-mentioned problems occurring in the prior art while advantages achieved by the prior art are maintained intact.

An aspect of the present disclosure provides an apparatus for controlling a vehicle exit alarm and a method thereof capable of improving the performance of a rear warning system and the reliability of a user by variably setting the alarm areas of the sensors for outputting an exit alarm when a vehicle stopping event occurs and detecting an alarm target moving object located at a rear side.

The technical problems to be solved by the present disclosure are not limited to the aforementioned problems, and any other technical problems not mentioned herein will be clearly understood from the following description by those skilled in the art to which the present disclosure pertains.

According to an aspect of the present disclosure, an apparatus for controlling a vehicle exit alarm includes a sensor device including a plurality of sensors that detect state information of a vehicle and information about a line and at least one moving object around the vehicle, and a controller that detects an alarm target moving object within a preset alarm area based on sensor data collected from the plurality of sensors to output an exit alarm when a safety exit warning function is activated when a stopping event occurs while the vehicle is driven, and changes the alarm area based on location information of the line, the vehicle, and the moving object when the moving object is out of the alarm area.

According to an embodiment, the controller may define a direction in which the moving object is detected from the vehicle as one side and an opposite direction of the one side as another side, based on lateral positions of the vehicle and the moving object when the stopping event occurs, and identify, from the sensor data, a first value representing a width of a side lane located in the one side of the vehicle, a second value representing a width of a stopping lane of the vehicle, a third value representing a distance from a side end of one side of the vehicle to a line located in the one side of the vehicle, a fourth value representing an width of the moving object, and a fifth value representing a distance from the side end of the one side of the vehicle to a side end of the other side of the moving object based on the lateral positions of the vehicle and the moving object, and detect the alarm target moving object based on the identified first to fifth values.

According to an embodiment, the controller may determine that the fifth value is a positive number (+) when the fifth value is a lateral distance value in one side direction based on the side end of the one side of the vehicle, and a negative number (-) when the fifth value is a lateral distance value in another direction.

According to an embodiment, the controller may determine that the moving object is located in a side lane area of the vehicle when the fifth value is the positive number (+), a sum of the fourth value and the fifth value exceeds the third value, and the sum of the fourth value and the fifth value is less than a sum of the first value and the third value.

According to an embodiment, the controller may change the alarm area based on the sum of the first value and the third value when the moving object located in the side lane area of the vehicle is out of the alarm area, and to detect the moving object in a changed area as the alarm target moving object.

According to an embodiment, the controller may determine that the moving object is located in a lane area other than a side lane area of the vehicle and to refrain from outputting the vehicle exit alarm when the fifth value is the positive number (+), a sum of the fourth value and the fifth value exceeds the third value, the sum of the fourth value and the fifth value is equal to or greater than a sum of the first value and the third value.

According to an embodiment, the controller may calculate a risk level for a corresponding moving object based on the sensor data when the fifth value is the positive number (+) and a sum of the fourth value and the fifth value is less than or equal to the third value, and change the alarm area in order to detect the moving object as the alarm target moving object when the calculated risk level exceeds a preset reference value.

According to an embodiment, the controller may calculate a risk level for a corresponding moving object based on the sensor data when the fifth value is the negative number (-), and change the alarm area in order to detect the moving object as the alarm target moving object when the calculated risk level exceeds a preset reference value.

According to an embodiment, a plurality of sensors may include at least one of a camera that obtains images around the vehicle, a radar, and a lidar.

According to another aspect of the present disclosure, a method of controlling a vehicle exit alarm includes collecting sensor data from a plurality of sensors that detect state information of a vehicle and information about a line and a moving object around the vehicle when a safety exit warning function is activated, and when a stopping event occurs while the vehicle is driven, and detecting an alarm target moving object within a preset alarm area based on the sensor data collected from the plurality of sensors, and changing the alarm area based on location information of the line, the vehicle, and the moving object and outputting an exit alarm for the alarm target moving object when the moving object is out of the alarm area.

### BRIEF DESCRIPTION OF THE DRAWINGS

The above and other objects, features and advantages of the present disclosure will be more apparent from the following detailed description taken in conjunction with the accompanying drawings:
FIG. 1 is a diagram illustrating a configuration of an apparatus for controlling a vehicle exit alarm according to an embodiment of the present disclosure;
FIG. 2 is a diagram illustrating a configuration of a sensor of an apparatus for controlling a vehicle exit alarm according to an embodiment of the present disclosure;
FIGS. 3A, 3B, 4A, 4B, and 5 are diagrams illustrating the operation of an apparatus for controlling a vehicle exit alarm according to an embodiment of the present disclosure; and
FIG. 6 is a flowchart illustrating a method of controlling a vehicle exit alarm according to an embodiment of the present disclosure.

### DETAILED DESCRIPTION

Hereinafter, some embodiments of the present disclosure will be described in detail with reference to the exemplary drawings. In adding the reference numerals to the components of each drawing, it should be noted that the identical or equivalent component is designated by the identical numeral even when they are displayed on other drawings. Further, in describing the embodiment of the present disclosure, a detailed description of well-known features or functions will be ruled out in order not to unnecessarily obscure the gist of the present disclosure.

In describing the components of the embodiment according to the present disclosure, terms such as first, second, "A", "B", (a), (b), and the like may be used. These terms are merely intended to distinguish one component from another component, and the terms do not limit the nature, sequence or order of the constituent components. Unless otherwise defined, all terms used herein, including technical or scientific terms, have the same meanings as those generally understood by those skilled in the art to which the present disclosure pertains. Such terms as those defined in a generally used dictionary are to be interpreted as having meanings equal to the contextual meanings in the relevant field of art, and are not to be interpreted as having ideal or excessively formal meanings unless clearly defined as having such in the present application.

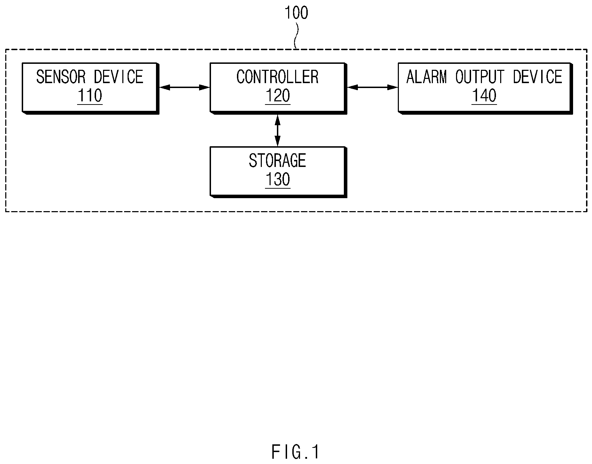

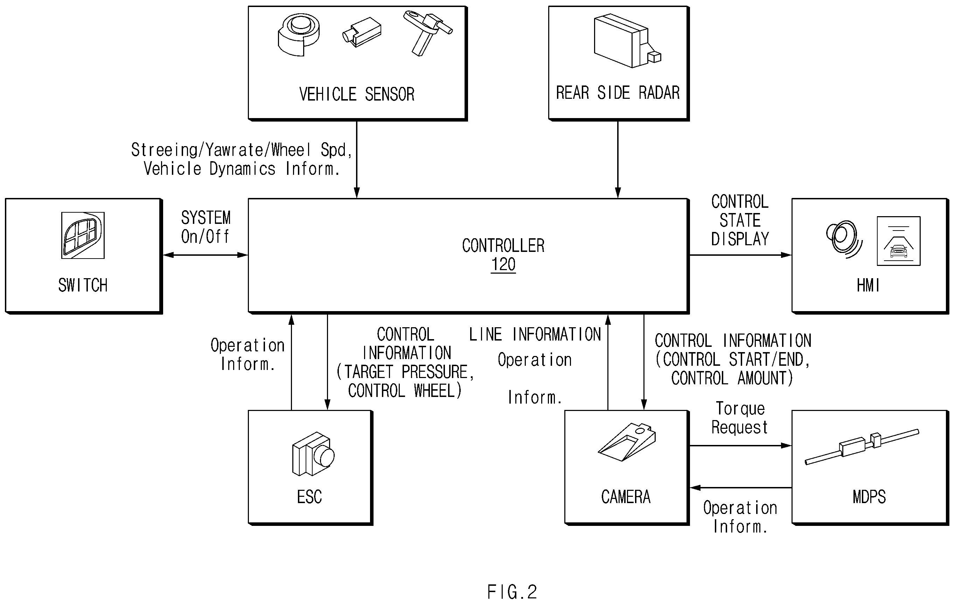

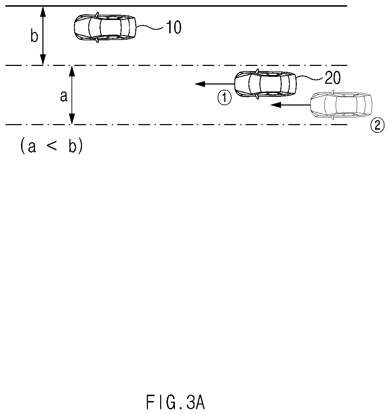

FIG. 1 is a diagram illustrating a configuration of an apparatus for controlling a vehicle exit alarm according to an embodiment of the present disclosure. FIG. 2 is a diagram illustrating a configuration of a sensor of an apparatus for controlling a vehicle exit alarm according to an embodiment of the present disclosure. FIGS. 3A, 3B, 4A, 4B, and 5 are diagrams illustrating the operation of an apparatus for controlling a vehicle exit alarm according to an embodiment of the present disclosure.

Referring to FIG. 1, an apparatus 100 for controlling a vehicle exit alarm according to an embodiment of the present disclosure may include a sensor device 110, a controller 120, storage 130, and an alarm output device 140.

The sensor device 110 may include a plurality of sensors that obtain information about vehicle surroundings.

Referring to FIG. 2, the sensor device 110 may include a camera, a radar, a lidar, and the like. In addition, it may be understood that the sensor device 110 includes various sensors capable of detecting information about a moving object around the vehicle.

The camera may detect a moving object such as a surrounding vehicle, a pedestrian, or a line. The camera may include a plurality of cameras such as a front camera, a rear camera, a left camera, and a right camera. The front and rear cameras may be installed in the front center and rear center of the vehicle, and the left and right cameras may be installed in the left and right side mirrors of the vehicle, but the embodiment is not limited thereto.

For example, the front camera may process the front image data of the vehicle captured by an image module to extract information about objects to be controlled such as lanes, road boundaries, surrounding vehicles, pedestrians, bicycles, light sources, road signs, and the like, and provide the information to the controller 120 to allow the controller 120 to perform a driving safety function and a convenience function.

In addition, the camera may include a VP image recognition system in which a surround view monitoring (SVM) camera and an object recognition function are combined.

The image recognition function of the VP image recognition system may process information from an omnidirectional camera to detect lines, road markers (e.g., arrows, letters, and the like), surrounding vehicles, and free spaces that exist in the immediate vicinity of the vehicle, and the results may be used to estimate omnidirectional sensor fusion and objects around the host vehicle. The VP image recognition system may be applied in various manners depending on the mounting location of the camera. The VP image recognition system may transmit information collected from the VP camera and result data to a driver assistance system (ADAS_DRV) through CAN communication.

The radar may be a sensor that detects objects in the near and far distance by using electromagnetic waves, and a plurality of radars may be installed in the front, rear, rear side, and the like of the vehicle. Because the plurality of radars is installed such that the detection areas partially overlap, blind spots may be minimized. In the following description, the radar installed on the rear side of the vehicle will be referred to as the rear side radar.

The lidar, which is a sensor that measures three-dimensional information (e.g., a point cloud) such as a distance, depth, and the like by using a pulse laser and uses the information to detect an object, may use a laser with a short wavelength, so that the precision and resolution are high and depth information is detected depending on the object. For example, the lidar may be mounted on the front/rear bumper or top of the vehicle to detect objects or structures in front/rear of the vehicle.

In addition, the sensor device 110 may further include a sensor that detects vehicle state information such as a driving state such as driving direction, angular speed, wheel speed, output torque of the vehicle, and the like, a door open state, and the like.

Each sensor of the sensor device 110 may transmit information detected around the vehicle and/or sensor data such as vehicle state information to the controller 120. In this case, the controller 120 may output information detected by the sensors such that the driver checks it, and may output an exit alarm based on the sensor data.

The controller 120 may perform overall functions for operating the apparatus 100 for controlling a vehicle exit alarm according to an embodiment of the present disclosure. In this case, the controller 120 may be implemented in the form of an independent hardware device including a memory and a processor for processing each operation, and may be operated in the form included in another hardware device such as a microprocessor, or a general-purpose computer system. At least one processor may be implemented as an application specific integrated circuit (ASIC), a central processing unit (CPU), a microcontroller, and/or a microprocessor.

The controller 120 may check whether a stopping event occurs based on the vehicle state information received from the sensor device 110. In this case, the controller 120 may determine that a stopping event occurs when the vehicle speed received from the sensor device 110 is 0 (zero) [kph] or less than a reference value, for example, 3 [kph].

When a vehicle stopping event occurs, the controller 120 may activate a safety exit warning (SEW) function. In this case, the safety exit warning function is a function that allows passengers to get off safely by determining and warning a collision risk situation when the door is opened when the vehicle is stopped.

When the safety exit warning function is activated, the controller 120 may control sensors for detecting a vehicle state, a vehicle surrounding environment, and a moving object to operate. Accordingly, the controller 120 may use sensor data received from each sensor of the sensor device 110 to detect a moving object (hereinafter, referred to as an 'alarm target moving object') that is an alarm target when getting off and may perform exit alarm control accordingly. In this case, the sensor data may include line information around the vehicle, information about a location, a speed, and the like of the moving object, and vehicle state information.

In this case, the controller 120 may improve the detection performance of an alarm target moving object among moving objects located around the vehicle before passengers get off by fusing the sensor data received from each sensor through sensor fusion. In this case, the controller 120 may assign a weight to each sensor data based on the characteristics of each sensor according to the driving state of the vehicle and/or the surrounding environment. As an example, the controller 120 may improve the accuracy and reliability of the safety exit warning function by fusing and utilizing sensor data with a weight greater than a reference among the sensor data through sensor fusion.

However, when activating the safety exit warning function, because the controller 120 detects the alarm target moving object based on a fixed alarm area "R" among the moving objects detected by the sensors, as shown in FIG. 3A, when a stopping lane width "b" where a vehicle 10 is located for stopping is wider than the side lane width "a" where a moving object 20 is located, the alarm area "R" may include only a portion of the side lane area. In this case, the moving object 20 located at point ① in the side lane area is included in the alarm area "R", so the corresponding moving object 20 may be detected as an alarm target moving object and an exit alarm may be output. However, the moving object 20 located at point ② of the side lane area is detected in an area other than the alarm area "R" even though the moving object 20 is located in the same lane area as point ①, so the moving object 20 is not detected as an alarm target.

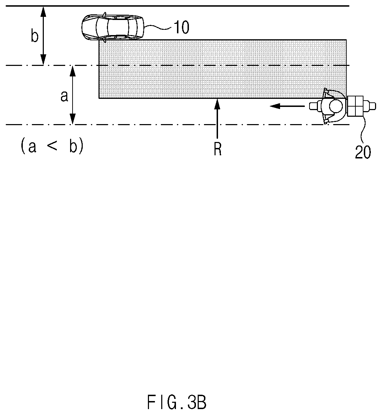

As an example, referring to FIG. 3B, when the moving object 20 is a bike, the corresponding moving object 20 may travel at various locations within the lane area. Therefore, even though the moving object 20 travels in the side lane area of the vehicle 10, when the moving object 20 is located in an area other than the preset alarm area "R" among the side lane area, the controller 120 may not detect the moving object 20 as an alarm target moving object.

Accordingly, the controller 120 may variably set the alarm area "R" according to the vehicle 10 and/or surrounding conditions in order to improve detection performance of the alarm target moving object.

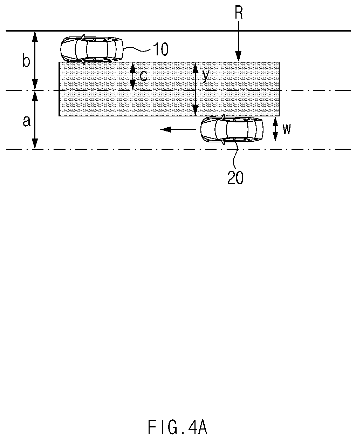

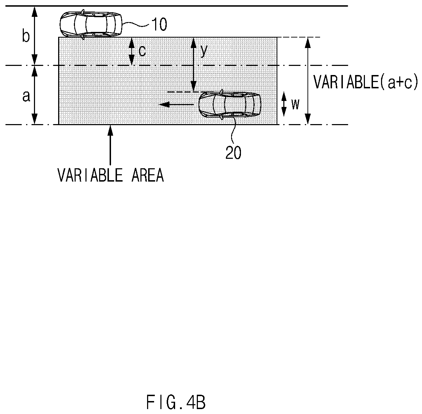

Referring to FIGS. 4A and 4B, when the default alarm area "R" is the same as that of FIG. 4A, the moving object 20 is located in the side lane area but is not included in the alarm area "R", so the moving object 20 may not be detected as an alarm target moving object.

In FIG. 4A, reference numeral 'a' is a side lane width, reference numeral 'b' is a stopping lane width, reference numeral 'c' is the distance (gap) from one side end (e.g., left side end) of the vehicle 10 to the line located on one side, reference numeral 'w' is the width of the moving object 20, and reference numeral 'y' is the distance (gap) from one side end of the vehicle 10 to the other side end (e.g., right side end) of the moving object 20. In this case, based on the lateral locations of the vehicle 10 and the moving object 20 when a stopping event occurs, the controller 120 may define the direction in which the moving object 20 is detected from the vehicle 10 as one side and the opposite direction thereto as another side.

In this case, the controller 120 may detect the alarm target moving object based on the size of a value of 'y' and the comparison values between a value of (a + c), a value of (w + y) value and a value of `c'.

First, the controller 120 determines whether the value of 'y' is a positive (+) value. In this case, the value of 'y' being a positive (+) value means the distance value to one side (e.g., in the left direction) based on one side end (e.g., the left side end) of the vehicle 10. Accordingly, the distance value from one side end (e.g., the left side end) of the vehicle 10 to another side (e.g., in the right direction) may be defined as a negative (-) value.

When the value of 'y' is a positive (+) value, (w+y) > c, and (w+y) < (a+c), although the corresponding moving object 20 is not included in the alarm area "R", the controller 120 determines that the moving object 20 exists in the side lane area, and changes the existing alarm area "R" based on (a+c) as shown in FIG. 4B.

As described above, when the existing alarm area "R" is varied based on (a+c), the moving object 20 is included in the variable area, so the controller 120 detects the moving object 20 as the alarm target moving object and outputs an exit alarm.

Accordingly, the controller 120 may consistently detect the moving object 20 as an alarm target moving object no matter where the moving object 20 is in the side lane area.

In addition, when the moving object 20 detected by the sensors is not included in the alarm area "R", the controller 120 may determine that the corresponding moving object 20 does not exist in the side lane area when the value of 'y' is a positive (+) value and (w + y) ≥ (a + c), and may not detect the corresponding moving object 20 as an alarm target moving object. For example, when the value of 'y' is a positive (+) value and (w + y) ≥ (a+c), the controller 120 may determine that the moving object 20 is located in another lane on one side rather than the first lane (a side lane) on one side based on the stopping lane where the vehicle 10 is located.

In this case, the controller 120 does not perform an exit alarm for the moving object 20 that is not detected as an alarm target moving object among the moving objects 20 identified based on the sensor data.

Meanwhile, when the moving object 20 is detected within the alarm area "R", the controller 120 may determine whether to output an exit alarm considering the location of the moving object 20 in the alarm area "R", time to collision (TTC), an entry angle of the moving object 20, and the like when the value of 'y' is a positive (+) value and (w + y) ≤ c, for example, when the moving object 20 is located between one side end of the vehicle 10 and the line in one side.

As an example, when the risk level calculated by considering the location of the moving object 20 within the alarm area "R", the time to collision (TTC), the entry angle of the moving object 20, and the like exceeds a reference value "X", the controller 120 detects the corresponding moving object 20 as an alarm target moving object and outputs an exit alarm. However, when the calculated risk level does not exceed the reference value "X", the controller 120 may not output an exit alarm even though the corresponding moving object 20 is included in the alarm area "R".

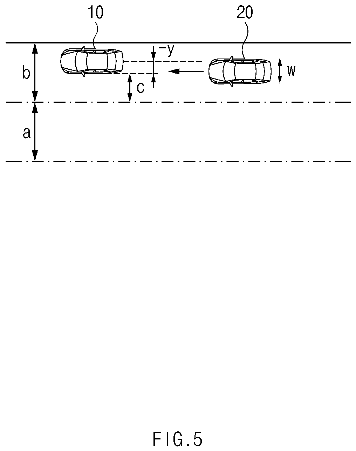

As shown in FIG. 5, when it is assumed that the side lane is located on one side (e.g., the left side) of the stopping lane, the value of 'y' is a negative (-) value when the other side end (e.g., the right side end) of the moving object 20 is located on the other side direction (e.g., the right side direction) of the vehicle 10 rather than one side end (e.g., the left side end) of the vehicle 10.

In this case, the moving object 20 may or may not be included in the alarm area "R".

When the value of 'y' is a negative (-) value, the controller 120 may detect the corresponding moving object 20 as an alarm target moving object and output an exit alarm when the risk level calculated by considering the location of the corresponding moving object 20, the time to collision (TTC), and the entry angle of the corresponding moving object 20, and the like exceeds the reference value "X", and may not output an exit alarm for the corresponding moving object 20 when the calculated risk level does not exceed the reference value "X".

When the controller 120 determines to output an exit alarm, the controller 120 may output an exit alarm signal to the alarm output device 140.

For example, the alarm output device 140 may include a display device such as an indicator in a side mirror located on one side of the vehicle 10, a warning light on an instrument panel, and a display screen, and a sound output device such as a speaker, buzzer, and the like. In addition, a device that alerts passengers so that they can recognize the exit alarm may be included in the alarm output device 140.

The storage 130 may store data, commands, algorithms, and the like required for the operation of the apparatus 100 for controlling a vehicle exit alarm. As an example, the storage 130 may store conditions and commands for performing the safety exit warning (SEW) function, and may store information about non-alarm modes and exception conditions when performing the safety exit warning (SEW) function.

In this case, the storage 130 may be a storage medium such as a random access memory (RAM), a static random access memory (SRAM), a read-only memory (ROM), a programmable read-only memory (PROM), an electrically erasable programmable read-only memory (EEPROM), and the like.

Although not shown in FIG. 1, the apparatus 100 for controlling a vehicle exit alarm of the vehicle 10, according to an embodiment of the present disclosure may further include a communication device.

The communication device may include a communication module for vehicle network communication with electrical components and/or controllers provided in the vehicle 10. In this case, vehicle network communication technology may include controller area network (CAN) communication, local interconnect network (LIN) communication, flex-ray communication, and the like.

In addition, the communication device may include a communication module for wireless Internet access and/or a communication module for short range communication. In this case, wireless Internet technology may include wireless LAN (WLAN), wireless broadband (WIBRO), Wi-Fi, world interoperability for microwave access (WiMAX), and the like. In addition, short range communication technology may include Bluetooth, ZigBee, ultra-wideband (UWB), radio frequency identification (RFID), infrared data association (IrDA), and the like.

Hereinafter, the operation flow of an apparatus for controlling a vehicle exit alarm according to the present disclosure configured as described above will be described in more detail.

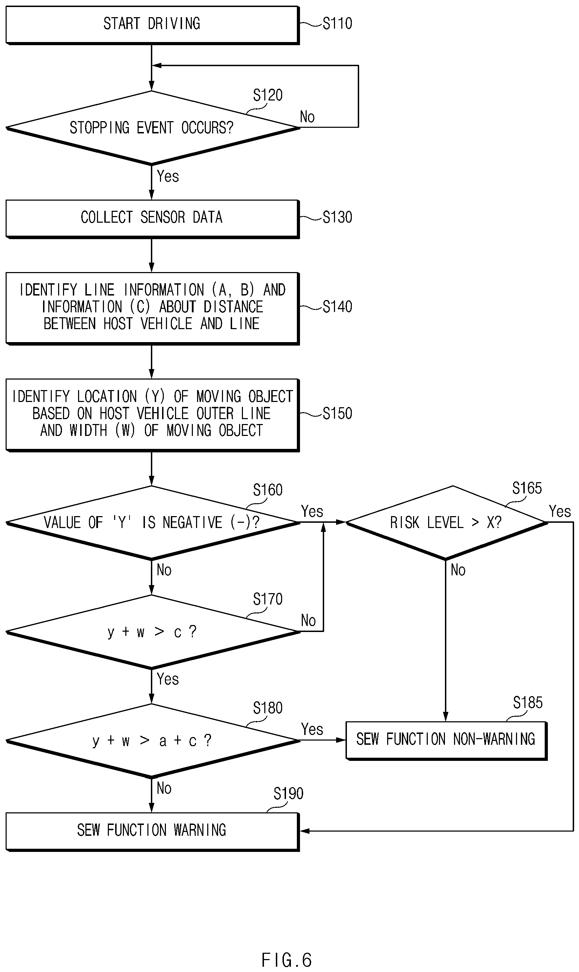

FIG. 6 is a flowchart illustrating a method of controlling a vehicle exit alarm according to an embodiment of the present disclosure.

Referring to FIG. 6, when the vehicle 10 starts driving in S110 and then, a stopping event occurs in S120, the apparatus for controlling a vehicle exit alarm collects sensor data from sensors in S130.

In S120, the apparatus for controlling a vehicle exit alarm of the vehicle 10 may determine that a stopping event occurs when the vehicle speed received from the sensors is 0 (zero) [kph] or less than a reference value, for example, 3 [kph].

In S130, the apparatus for controlling a vehicle exit alarm of the vehicle 10 may collect sensor data from a camera, a radar, and a lidar, and in addition, may collect the sensor data from various sensors that are used in a driver driving assistance system (ADAS_DRV) such as MFC, VP, and the like. In this case, the sensor data may be utilized in a fused form through sensor fusion.

In S140, the apparatus for controlling a vehicle exit alarm of the vehicle 10 identifies line information, such as information about the stopping lane width "a" and the side lane width "b" of the vehicle 10, and information about the distance "c" between the vehicle 10 and the line, based on the sensor data collected in S130. In addition, in S150, the apparatus for controlling a vehicle exit alarm of the vehicle 10 identifies information about the location of the moving object 20, such as information about the distance "y" between one side end of the vehicle 10 and the other side end of the moving object 20, and the width "w" of the moving object 20, based on the one side end of the vehicle 10.

In S190, the apparatus for controlling a vehicle exit alarm of a vehicle determines whether the value of `y', which is the location of the moving object 20 identified in S150, is a positive (+) or negative (-) value, calculates the risk level considering the location of the corresponding moving object 20, the time to collision (TTC), and the entry angle of the moving object 20 when the value of 'y' is a negative (-) value in S160, and detects the corresponding moving object 20 as an alarm target moving object and outputs an exit alarm when the calculated risk level exceeds the reference value "X" in S165. Meanwhile, when the calculated risk level does not exceed the reference value "X", an exit alarm may not be output for the corresponding moving object 20 in S185.

In S190, the apparatus for controlling a vehicle exit alarm of a vehicle calculates the risk level considering the location of the corresponding moving object 20, the time to collision (TTC), and the entry angle of the moving object 20 when the value of 'y' is a positive (+) value in S160, and it is identified in S170 that the value of (y + w) does not exceed the value of `c' based on the information identified in S140 and S150, and detects the corresponding moving object 20 as an alarm target moving object and outputs an exit alarm when the calculated risk level exceeds the reference value "X" in S165. Meanwhile, when the calculated risk level does not exceed the reference value "X", an exit alarm may not be output for the corresponding moving object 20 in S185.

When the value of 'y' is a positive (+) value in S160, and based on the information identified in S140 and S150, it is identified in S180 that the value of (y + w) is not less than the value of (a + c) while the value of (y + w) exceeds the value of 'c', because the moving object 20 is not detected as an alarm target moving object, the apparatus for controlling a vehicle exit alarm of a vehicle does not output an exit alarm for the corresponding moving object 20 in S185.

Meanwhile, when the value of 'y' is a positive (+) value in S160, and based on the information identified in S140 and S150, it is identified in S180 that the value of (y + w) is less than the value of (a + c) while the value of (y + w) exceeds the value of `c', the apparatus for controlling a vehicle exit alarm of a vehicle detects the corresponding moving object 20 as an alarm target moving object and outputs an exit alarm in S190.

Although omitted in FIG. 6, when the value of (y+w) exceeds the value of 'c' in S170, it is identified in S180 that the value of (y + w) is less than the value of (a + c), and the corresponding moving object 20 is not included in the alarm area "R", the apparatus for controlling a vehicle exit alarm of a vehicle may vary the preset alarm area "R" based on the value of (a + c), detect the moving object 20 included in the variable area as an alarm target moving object, and output an exit alarm in S190.

According to an embodiment of the present disclosure, when a vehicle stopping event occurs, the alarm area of the sensors for outputting an exit alarm is variably set depending on the vehicle or surrounding situation to detect the alarm target moving object located in a rear side direction, thereby improving the performance of a rear warning system and user reliability.

Hereinabove, although the present disclosure has been described with reference to exemplary embodiments and the accompanying drawings, the present disclosure is not limited thereto, but may be variously modified and altered by those skilled in the art to which the present disclosure pertains without departing from the spirit and scope of the present disclosure claimed in the following claims.

## Claims

1. An apparatus for controlling a vehicle exit alarm, the apparatus comprising:
a sensor device including a plurality of sensors configured to detect state information of a vehicle and information about a line and at least one moving object around the vehicle; and
a controller configured to detect an alarm target moving object within a preset alarm area based on sensor data collected from the plurality of sensors to output an exit alarm when a safety exit warning function is activated when a stopping event occurs while the vehicle is driven, and change the alarm area based on location information of the line, the vehicle, and the moving object when the moving object is out of the alarm area.

2. The apparatus of claim 1, wherein the controller is configured to define a direction in which the moving object is detected from the vehicle as one side and an opposite direction of the one side as another side, based on lateral positions of the vehicle and the moving object when the stopping event occurs; and
identify, from the sensor data, a first value representing a width of a side lane located in the one side of the vehicle, a second value representing a width of a stopping lane of the vehicle, a third value representing a distance from a side end of one side of the vehicle to a line located in the one side of the vehicle, a fourth value representing a width of the moving object, and a fifth value representing a distance from the side end of the one side of the vehicle to a side end of the other side of the moving object based on the lateral positions of the vehicle and the moving object, and detect the alarm target moving object based on the identified first to fifth values.

3. The apparatus of claim 2, wherein the controller is configured to determine that the fifth value is a positive number (+) when the fifth value is a lateral distance value in one side direction based on the side end of the one side of the vehicle, and a negative number (-) when the fifth value is a lateral distance value in another side direction.

4. The apparatus of claim 3, wherein the controller is configured to determine that the moving object is located in a side lane area of the vehicle when the fifth value is the positive number (+), a sum of the fourth value and the fifth value exceeds the third value, and the sum of the fourth value and the fifth value is less than a sum of the first value and the third value.

5. The apparatus of claim 4, wherein the controller is configured to change the alarm area based on the sum of the first value and the third value when the moving object, located in the side lane area of the vehicle, is out of the alarm area, and to detect the moving object in a changed area as the alarm target moving object.

6. The apparatus of claim 3, wherein the controller is configured to determine that the moving object is located in a lane area other than a side lane area of the vehicle and to refrain from outputting the vehicle exit alarm when the fifth value is the positive number (+), a sum of the fourth value and the fifth value exceeds the third value, the sum of the fourth value and the fifth value is equal to or greater than a sum of the first value and the third value.

7. The apparatus of claim 3, wherein the controller is configured to calculate a risk level for a corresponding moving object based on the sensor data when the fifth value is the positive number (+) and a sum of the fourth value and the fifth value is less than or equal to the third value, and change the alarm area in order to detect the moving object as the alarm target moving object when the calculated risk level exceeds a preset reference value.

8. The apparatus of claim 3, wherein the controller is configured to calculate a risk level for a corresponding moving object based on the sensor data when the fifth value is the negative number (-), and change the alarm area in order to detect the moving object as the alarm target moving object when the calculated risk level exceeds a preset reference value.

9. The apparatus of any one of claims 1 to 8, wherein a plurality of sensors includes at least one of a camera that obtains images around the vehicle, a radar, and a lidar.

10. A method of controlling a vehicle exit alarm, the method comprising:
collecting sensor data from a plurality of sensors that detect state information of a vehicle and information about a lane and a moving object around the vehicle when a safety exit warning function is activated, and when a stopping event occurs while the vehicle is driven; and
detecting an alarm target moving object within a preset alarm area based on the sensor data collected from the plurality of sensors, and changing the alarm area based on location information of the lane, the vehicle and the moving object; and outputting an exit alarm for the alarm target moving object when the moving object is out of the alarm area.
